# EUROPEAN PATENT APPLICATION

(11) **EP 1 195 944 A2**
(43) Date of publication of application: **10.04.2002**
(21) Application number: 01308555.0
(22) Date of filing: 05.10.2001
(51) Int. Cl.: H04L 12/24

(54) **User interface for device detection**

(30) Priority: 31.10.2000 US 702648; 05.10.2000 US 679691
(71) Applicant: Hewlett-Packard Company, Palo Alto, CA 94304 (US)
(72) Inventor: Ferguson, David P., Berthoud, CO 80513 (US); Maddocks, Peter M., Ft Collins, CO 80524 (US); Thayer, Nicholas D., Greeley, CO 80634 (US)
(74) Representative: Powell, Stephen David

(57) **Abstract**

A user interface system comprises a command user interface (502) in communication with a control process running on a network host and a device detection user interface (602) associated with the command user interface and in communication with the control process and at least one remote command process running on at least one network host. The user interface can be used for receiving a scan request with a command user interface (1300), generating a device detection user interface (1306), receiving instructions as to which hosts to scan with the device detection user interface, sending a scan request to at least one remote host, scanning the at least one remote host to determine if devices are connected to it (1310), receiving a response to the scan request that indicates whether a device is connected to the at least one remote host, and presenting the scan response to a user with the command user interface (1312).

## Description

The present disclosure relates to a user interface for a device detection system and method. More particularly, the present disclosure relates to an interface for a system and method with which devices connected to various hosts of a network can be detected from a central control point.

In most office settings, a plurality of computing devices or hosts are interconnected through a network, for example, a local area network (LAN). Such hosts can include, for instance, personal computers (PCs), network servers, and the like. Normally, many or all of these hosts comprise devices that are directly connected to the hosts. Such devices can include, for example, disk drives, tape drives, tape libraries, modems, *etc.*

It is often useful for the network manager and/or technician to know what hosts are connected to the network and what devices are connected to these hosts. For instance, this information is useful in maintaining an inventory of the network devices. However, it can be difficult to keep track of all the devices connected to the network, particularly where the network is large and comprises many different hosts. Presently, the existence of such devices is determined by manually scanning each host of the network separately. Once each host has been scanned in this manner, the various devices can be located from a central point and, if desired, can be accessed for use from this central point or from another point in the network.

Clearly, the procedure described above can be time-consuming, especially where the network is large. Therefore, it would be desirable to have a system and method for detecting devices connected to the network from a central control point so as to simplify and at least partially automate the device detection procedure.

The present disclosure relates to a user interface for a device detection system. The user interface comprises a command user interface in communication with a control process running on a network host and a device detection user interface associated with the command user interface and in communication with the control process and at least one remote command process running on at least one network host.

The user interface can be utilized in a method for detecting devices connected to hosts of a network. This method comprises receiving a scan request with a command user interface, generating a device detection user interface, receiving instructions as to which hosts to scan with the device detection user interface, sending a scan request to at least one remote host, scanning the at least one remote host to determine if devices are connected it, receiving a response to the scan request that indicates whether a device is connected to the at least one remote host, and presenting the scan response to a user with the command user interface.

The features and advantages of the invention will become apparent upon reading the following specification, when taken in conjunction with the accompanying drawings.

The invention can be better understood with reference to the following drawings. The components in the drawings are not necessarily to scale, emphasis instead being placed upon clearly illustrating the principles of the present invention.

FIG. 1 is a schematic view of a device detection system of the present invention.

FIG. 2 is a schematic view of an example network in which the device detection system of FIG. 1 is used.

FIG. 3 is a flow diagram of a method for detecting devices connected to a network from a central control point with the device detection system of FIG. 1.

FIG. 4 is a flow diagram of a method for detecting devices connected to a particular host with the device detection system of FIG. 1.

FIGS. 5-12 are various views of a user interface for the device detection system of FIG. 1.

FIG. 13 is a flow diagram of a method for using the user interface shown in FIGS. 5-12 to detect devices with the device detection system of FIG. 1.

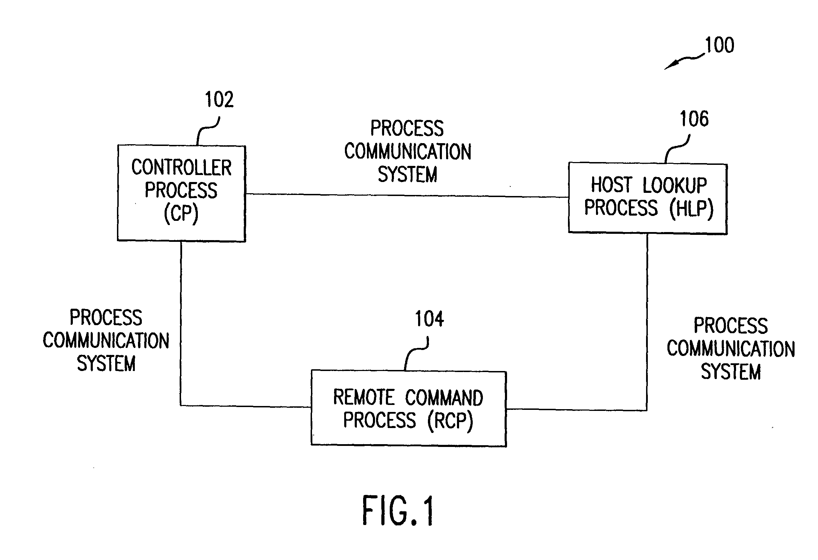

Referring now in more detail to the drawings, in which like numerals indicate corresponding parts throughout the several views, FIG. 1 illustrates a device detection system 100 of the present invention. Generally speaking, the device detection system 100 comprises a controller process (CP) 102, a remote command process (RCP) 104, and a host lookup process (HLP) 106. As will be appreciated from the discussion that follows, each of the processes identified in FIG. 1 can be implemented in software and/or hardware provided in one or more hosts of a network. Persons having ordinary skill in the art will understand that, where the processes are implemented in software, these processes can be stored and transported on any computer readable medium for use by or in connection with an instruction execution system, apparatus, or device, such that a computer-based system, processor containing system, or other system can fetch the instructions from the instruction execution system, apparatus, or device and execute the instructions.

In the context of this disclosure, a "computer readable medium" can be a means that can contain, store, communicate, propagate, or transport the program for use by or in connection with the instruction execution system, apparatus or device. A compute readable medium can be, for example, an electronic, magnetic, optical, electromagnetic, infrared, or semiconductor system, apparatus, device, or propagation medium. More specific examples of compute readable media include the following: an electrical connection having one or more wires, camera memory card, affordable computer diskette, a random access memory (RAM), a read only memory (ROM), an erasable programmable read only memory (EPROM or Flash memory), an optical fiber, and a portable compact disk read only memory (CD ROM). It is to be noted that the computer readable medium can even be paper or another suitable medium upon which the program is printed as the program can be electronically captured, via for instance optical scanning of the paper or other medium, then compiled, interpreted, or otherwise processed in a suitable manner if necessary, and then stored in a computer memory.

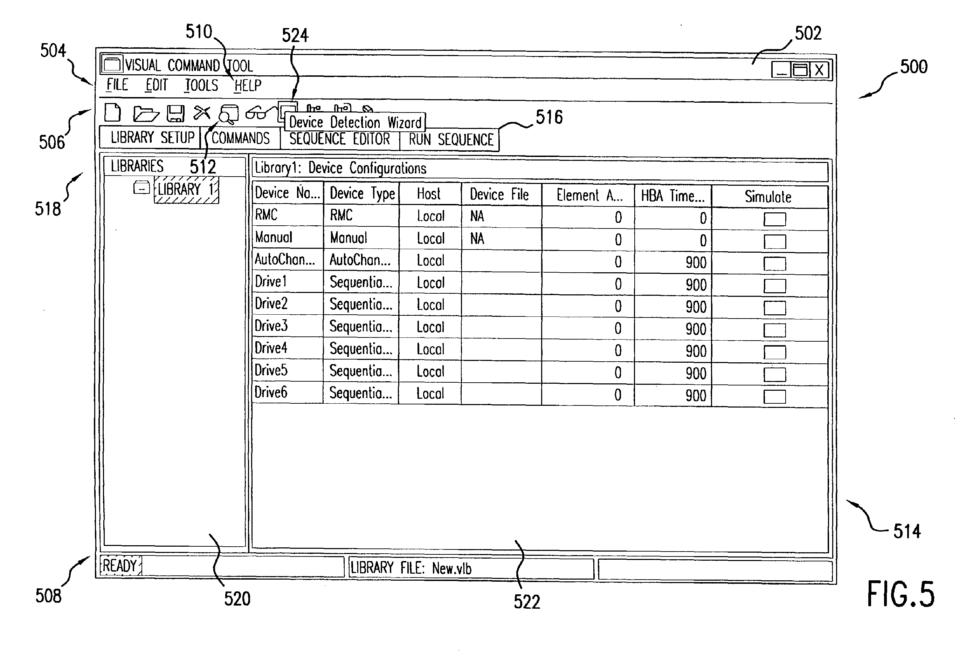

With reference to FIG. 1, the CP 102 serves as a central control point of the device detection system 10. Accordingly, the CP 102 normally comprises a user interface (see FIGS. 5-12) with which a user communicates with the device detection system 100. As will be apparent from the discussion that follows, the CP 102 is used to send commands to the various hosts of the network so that information regarding these hosts (*e.g.*, the number and nature of devices connected to these hosts) can be retrieved and communicated to the user.

The RCP 104 comprises a process that is provided on at least each host that comprises devices to be detected. Normally, the RCP 104 is arranged as a service that continuously runs in the background of the host. Therefore, the RCP 104 normally runs in an idle state until called upon to scan the host to determine which devices are connected to the host. In particular, the RCP 104 normally is called upon to interface with the host upon receiving a scan request from the CP 102. In addition to scanning the host to detect devices, the RCP 104 further registers with the HLP 106. Normally, this registration initially occurs upon start-up of the RCP 104. Accordingly, when the RCP is initiated, the RCP sends a message to the HLP 106 to inform the HLP of the RCP's existence. In addition to this initial registration, the RCP 104 normally reconfirms its registration with the HLP 106 periodically (*e.g*., once every minute) such that its registration is periodically updated with the HLP.

The HLP 106 maintains a list of the registered RCPs 104 of the network. In use, the HLP 106 receives the registration messages from the RCPs 104 and registers the RCPs' existence. Due to the periodic reconfirmation of registration received from the RCPs 104, the HLP 106 normally maintains an up-to-the-minute inventory of the hosts within the network that include RCPs 104. The HLP 106 shares the information contained within the list with the CP 102 upon receiving requests for this information from the CP. Normally, the HLP 106 will time-out a host if the HLP does not receive a confirmation from the host's RCP 104 after a predetermined length of time. In particular, if a confirmation of an RCP's existence is not obtained after the expiration of this time period, the HLP 106 assumes that the RCP's host has shut down.

As indicated in FIG. 1, the CP 102 is connected to both the RCP 104 and the HLP 106 so that it can communicate to these processes. In addition, the RCP 104 is connected to the HLP 106 in like manner. As is further indicated in FIG. 1, each of these processes 102-106 communicate with a process communications system such as an interprocess communication system. Although this process communication system can take substantially any form, the system normally comprises one which can be used with substantially any operating system. One example of a suitable process communications system is remote method invocation (RMI) written in the Java language. As is known in the art, Java RMI® can be used with any operating system that is capable of running the Java Virtual Machine® . Other suitable systems include a Corba® based system and a DCOM based system.

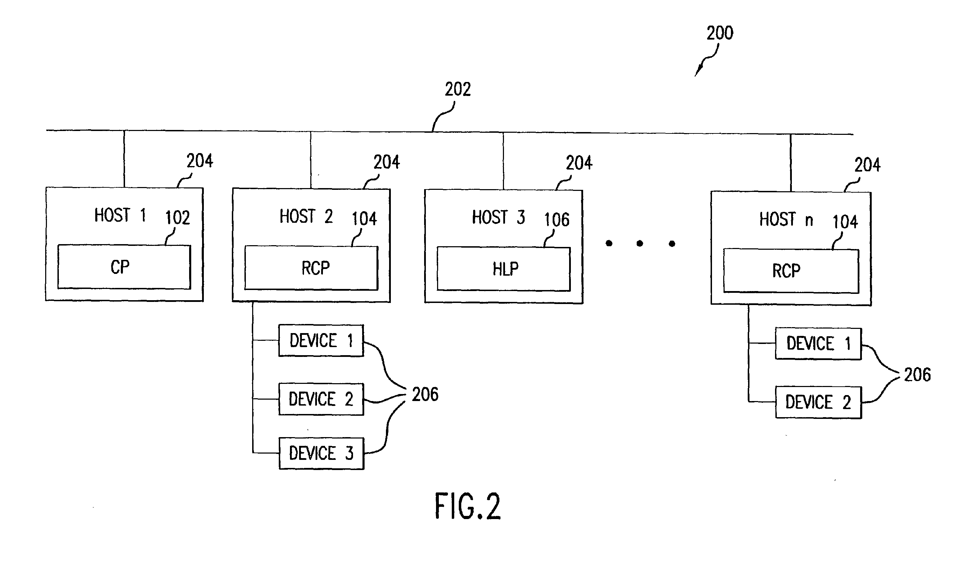

FIG. 2 illustrates an example network 200 in which the device detection system 100 can be used. As indicated in this figure, the network 200 comprises a network backbone 202 to which a plurality of hosts 204 are connected. Each host 204 comprises a computing device. By way of example, the hosts can comprise workstations, servers, or any equivalent computing device capable of connecting to the network 200. As indicated in FIG. 2, the network 200 can comprise any number of hosts 1 through n. By way of example, four hosts 204 are depicted in FIG. 2, *i.e.*, Host 1, Host 2, Host 3, and Host n. As will be appreciated by persons of ordinary skill in the art, each of the hosts 204 operate with an operating system stored therein. The particular type of operating system running on each host 204 is not significant to proper operation of the device detection system 100. Accordingly, the network 200 can comprise a heterogeneous network in which many different operating systems are used by the network hosts 204. By way of example, the hosts can be operating a Windows® system, a Linux® system, an HP-UX® system, a Solaris® system, or the like.

As indicated in FIG. 2, each of the hosts 204 can comprise a process of the device detection system 100 shown in FIG. 1. Accordingly, by way of example, Host 1 comprises the CP 102, Host 3 comprises the HLP 106, and Hosts 2 and n comprise RCPs 104. Although a particular correlation between the various hosts 204 and the processes 102-106 is illustrated in FIG. 2, it is to be understood that these locations are exemplary only. In fact, a single host 204 of the network 200 can, optionally, comprise each of the CP 102, RCP 104, and HLP 106, if desired. Normally however, each host 204 within the network 200 will know the location of the HLP 106 such that each host comprising an RCP 104 is capable of registering with the HLP and the CP 102 can locate the HLP when sending a host list request.

With further reference to FIG. 2, Host 2 and Host n comprise devices 206 that are directly connected to these hosts. By way of example, these devices 206 are connected to their respective hosts 204 with a common connection protocol such as small computer system interface (SCSI). Alternatively, the devices 206 can be connected to the host 204 with fiber channel technology. By way of example, each device 206 can comprise disk drive, tape drive, tape library, modem, or substantially any other device commonly connected to a network host. Typically, each host 204 is equipped with an application program interface (API) that is capable of scanning the host bus to determine the addresses of the various devices 206 that are connected to it.

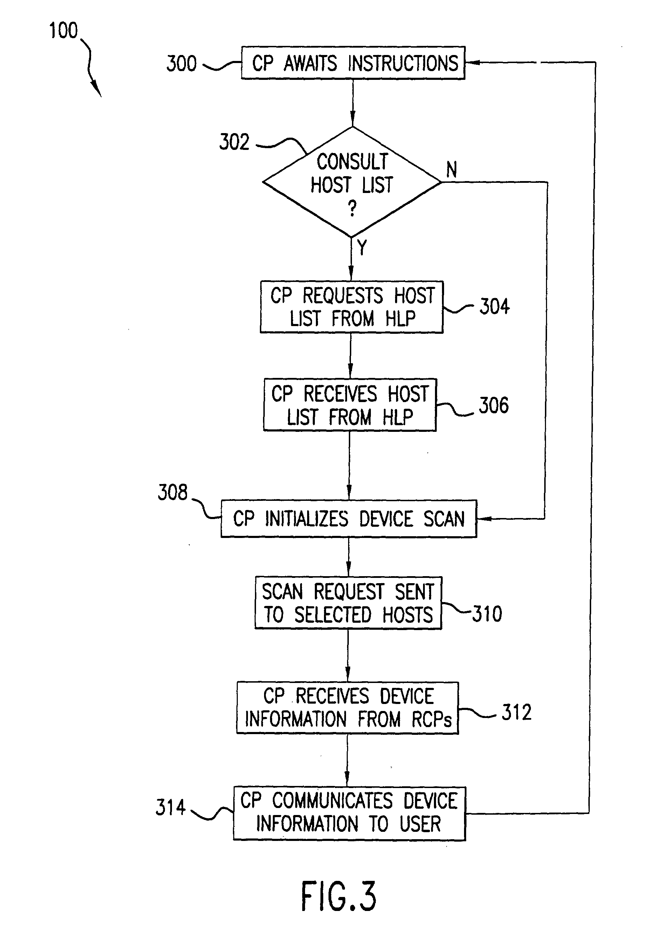

FIG. 3 illustrates a method for detecting devices across a network such as that illustrated in FIG. 2. In particular, FIG. 3 illustrates the use of the CP 102 of the device detection system 100 in communicating with the RCP 104 and LCP 106 of the system to locate and obtain information about these devices. As indicated in block 300, the CP 102 awaits instructions from, for example, a user of the system. Normally, the CP 102 is located at a central control workstation that is convenient to the user. As indicated at 302, it is first determined whether the CP 102 will obtain host information prior to conducting the device detection. Normally, this determination is made by the user in requesting the device detection. However, this determination could, alternatively, be made by the CP 102 if the CP is pre-programmed for automatic device detection. If the host list is to be consulted prior to conducting the device detection, flow continues to block 304 where the CP 102 requests the host list from the HLP 106. As identified above, the CP 102 communicates with the HCP 106 through the process communication system (FIG. 1).

Once the host list request has been delivered to the HLP 106, the HLP transmits the list to the CP 102 and the host list is received by the CP as indicated in block 306. Once the hosts to be scanned have been identified, the CP 102 initializes a device scan across the network as indicated in block 308. Where the host list is not to be consulted prior to conducting the device scan, *i.e*., where the CP 102 or the user already knows which hosts to scan without the list, flow continues from 302 directly to block 308.

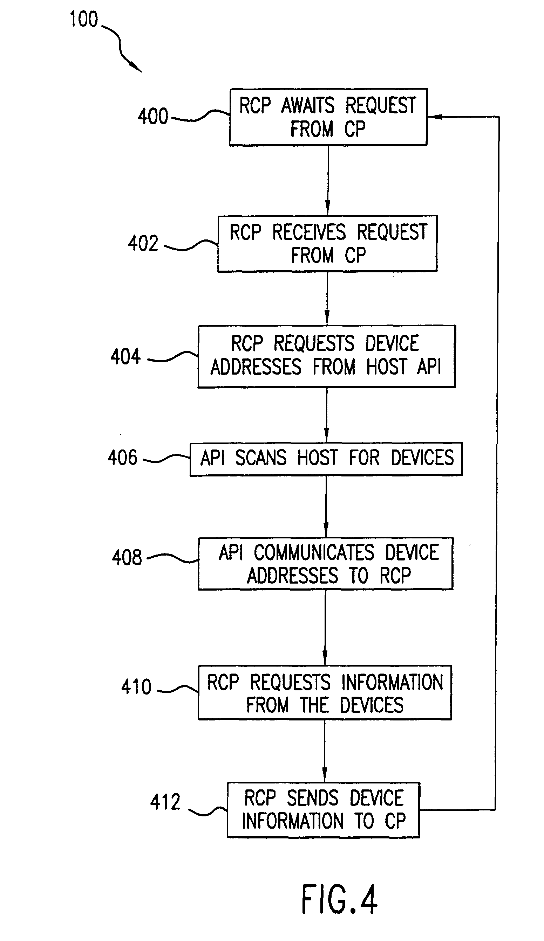

The CP 102 sends scan requests to each of the selected hosts as identified in block 310. Normally, the scan requests are issued from the CP 102 to the various RCPs 104 in parallel. In particular, a thread (*i.e*., a flow of execution within a process) can be directed to each RCP 104 that is to be scanned for devices. FIG. 4 illustrates a method for detecting devices connected to a particular host with an RCP 104. In particular, this figure illustrates the device detection steps involved when a scan request is received. As indicated in block 400, the host RCP 104 awaits the scan request from the CP 102. Once a scan request is received from the CP 102 as indicated in block 402, the RCP 104 requests device address information from the API of its host as indicated in block 404. At this point, the API performs a device scan of the host, as indicated in block 406, to determine the addresses of the devices, if any. Once the addresses have been determined, the API communicates the device addresses to the RCP 104 as indicated in block 408. The RCP 104 then uses these addresses to obtain information about the various devices connected to the host. In particular, the RCP 104 requests information as to the device name and type from the device as indicated in block 410. After obtaining this information, the RCP 104 can send this information to the CP 102 as indicated in block 414. At this point, flow can return to block 400, and the RCP 104 can again await a scan request from the CP 102.

Once some or all of the device detection information has been collected by the CP 102, this information can be communicated to the user, as indicated in block 314 with, for instance, the control point host (Host 1 in FIG. 2). By way of example, this information can be transmitted to the user in tabular form and can include the names of the devices, the types of the devices, the hosts to which these devices are connected, and the device addresses of the devices. At this point, the CP 102 and the user interfacing with the CP will know the number, location, and type of each device connected to the network 200. Flow can then return to block 300 and the CP 102 can again await instructions as identified above. With the device information, the various devices can be accessed through conventional methods so that they can be used remotely. For instance, where a particular device is a storage device, the device can perform a "write" function so that information transmitted to the host to which the device is connected can be stored by the device.

As identified above, the device detection system 100 normally includes a user interface with which the user can operate the device detection system. Typically, this user interface comprises a graphical user interface (GUI) that is provided to the user at the CP host (*e.g*., Host 1 in FIG. 2). FIGS. 5-12 illustrate an example GUI 500 that can be used in the device detection system 100. As is indicated in these figures, the GUI 500 can be presented as a window-based system similar to those used in common word processor and spread sheet applications. Normally, the software for the GUI 500 is written in Java language. It is to be understood, however, that a non-window-based systems could be used and that the software for the system could be written in a language other than Java.

With reference to FIG. 5, illustrated is a command user interface GUI 502 entitled "Visual Command Tool" (VCT). The VCT is an internal test tool which serves as the parent application for the device detection system 100. As will be understood from the discussion that follows, the command user interface GUI 502 can be used to access devices once they are detected with the device detection system 100. The command user interface GUI 502 includes a pull-down menu tool bar 504, a command button toolbar 506, and a status bar 508. As is conventional in the art, the pull-down menu toolbar 504 comprises a plurality of pull-down menus 510 that can be selected with, for instance, a mouse to reveal a plurality of different available commands. In similar manner, the command button toolbar 506 comprises a plurality of command buttons 512 that can also be used to input commands of the user. The status bar 508 identifies the status of the VCT. By way of example, as shown in FIG. 5, the status of the VCT is indicated in this status bar 508 as being "Ready."

Further included in the command user interface GUI 502 is a view window 514. This view window 514 is used to convey various information to the user. Normally, a plurality of different sheets 516 of information can be presented to the user through the view window 514. For instance, shown in FIG. 5 is a "Library Setup" sheet. This setup sheet is divided into a "Libraries" window 520 and a "Device Configurations" window 522. The Libraries window 520 identifies the various libraries of hosts that are connected to the network. For instance, shown in Libraries window 520 is a file folder icon identifying "Libraryl." As indicated in the Libraries window 520, Libraryl is highlighted such that the Device Configurations window 522 identifies each of the devices associated with Libraryl. As is discussed below, the Device Configurations window 522 is used to present tabulated information concerning each of the devices connected to a particular network library after a scan has been completed.

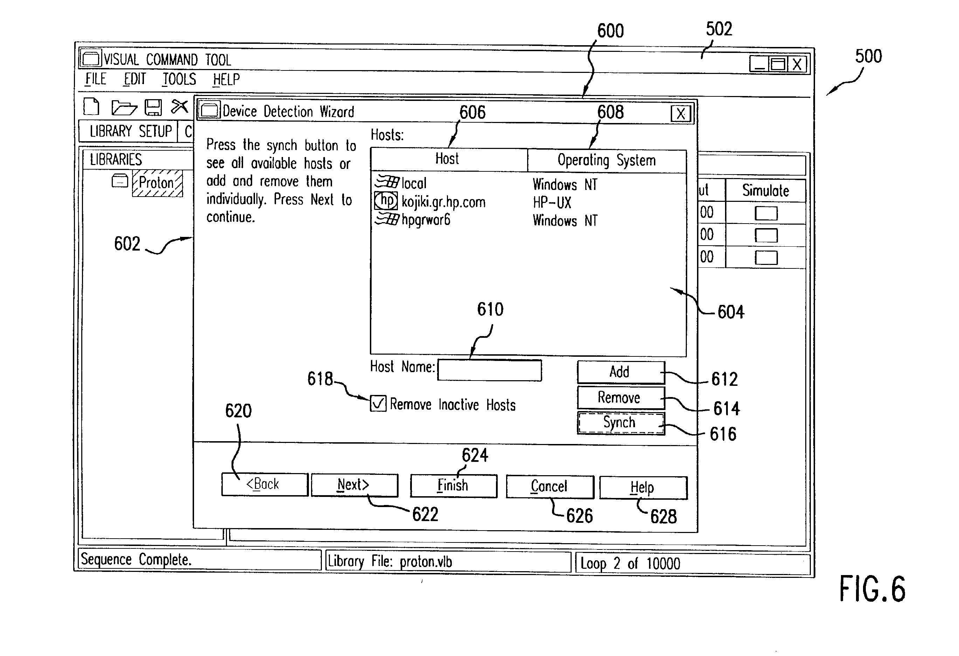

When the user desires to perform a scan, he or she normally uses a device detection GUI available through the command user interface GUI 502. FIGS 6-11 illustrate as example device detection GUI entitled Device Detection Wizard (DDW). Normally, the device detection GUI can be accessed from the command user interface GUI 502 shown in FIG. 5 in a variety of ways. For instance, the user can select a device detection GUI button 524 provided in the command button toolbar 506. Alternatively, the device detection GUI can be summoned via a command located in one of the pull-down menus 510 of the pull-down menu toolbar 504. In a further alternative, a menu can be accessed by simply "right clicking" with a mouse to access device detection commands.

The device detection GUI normally is presented as a pop-up window that overlaps the command user interface GUI 502. Therefore, normally both the device detection GUI and the command user interface GUI 502 are visible to the user at the same time. FIG. 6 illustrates a first device detection GUI window 600. This window 600 serves as a host registration window. As indicated in the figure, the first device detection GUI window 600 includes a instruction box 602 that includes an instruction to the user regarding how to operate the device detection system 100. In addition, the window 600 includes a view window 604 that comprises a "Host" column 606 that indicates hosts that are registered with the device detection system 100, and an "Operating System" column 608 that identifies the operating system of each host shown in the Host column. Adjacent the view window 604 is a host name block 610 that can be used to enter the name of a host that the user wishes to add to the host column 606. In addition to this block 610 are provided an "Add" button 612, a "Remove" button 614, and a "Synch" button 616. As is discussed below, the Add and Remove buttons 612 and 614 are used to add and remove hosts, respectfully, to and from the Host column 606. In particular, when a host name is entered in the host name block 610 the host can be added to the Host column 602 by selecting the Add button 612. To remove a host from the Host column 606, the user can highlight one of the hosts in the conventional manner and then select the Remove button 614.

The first device detection GUI window 600 normally further includes a "Remove Inactive Hosts" checkbox 618. When a check appears in this checkbox 618, the device detection system 100 inactive hosts will be removed from the Host column 606 of the view window 604 the next time the synch button 616 is depressed. Also included in the first device detection GUI window 600 are a "Back" button, a "Next" button 622, a "Finish" button 624, a "Cancel" button 626, and a "Help" button 628. As will be appreciated by persons having ordinary skill in the art, the "Back" and "Next" buttons 620 and 622 are used to navigate through the device detection GUI. In particular, the various windows of the device detection GUI can be accessed by either selecting Back or Next in the conventional manner. The Finish button 624 can be selected by the user after host registration has been completed to exit the device detection GUI. Similarly, the Cancel button 626 can be selected at any time to exit the device detection GUI. The Help button 628 can be used to access help information regarding the use and function of the device detection system 100 or the device detection GUI.

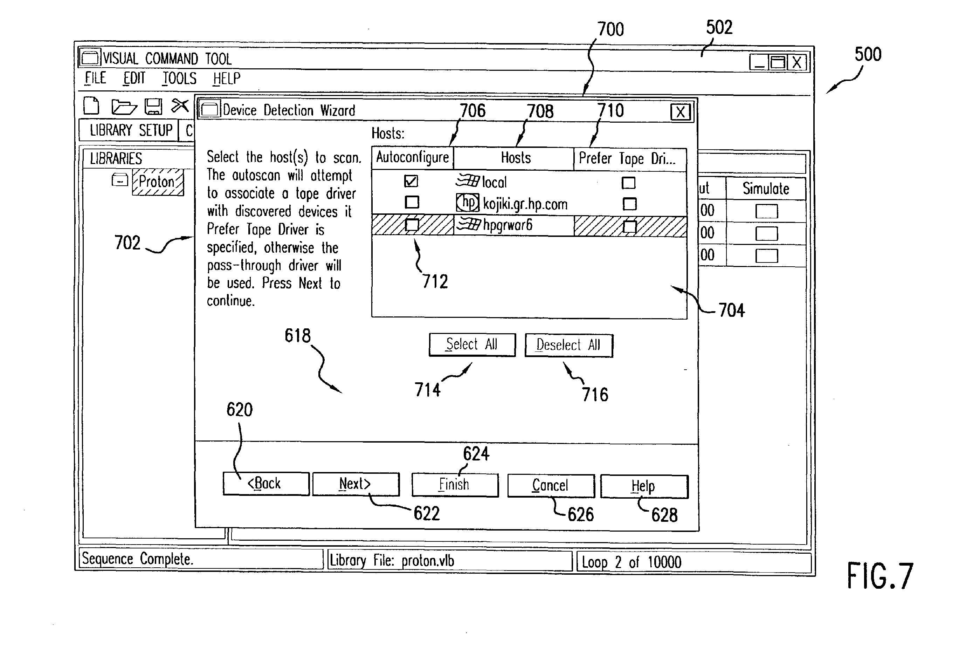

FIG. 7 illustrates a second device detection GUI window 700. This window 700 serves as a host selection window. Window 700 is presented to the user after the user selects the "Next" button 622 of the first device detection GUI window 600 shown in FIG. 6. Similar to the first device detection GUI window 600, the second device detection GUI window 700 comprises an instruction box 702 and a view window 704. However, the view window 704 of the second device detection GUI window 700 comprises an "Auto Configure" column 706, a "Hosts" column 708, and an association preference column 710. As with the Host column 606 of the first device detection GUI window 600, the Hosts column 708 presents each of the hosts registered with the device detection system 100. Scanning of these various hosts listed in the host column 708 can be achieved by checking check boxes 712 of the Auto Configure column 706 and selecting the Next button 622 of the second device detection GUI window 700. In particular, where a check exists in a checkbox 712 associated with a particular host listed in the Hosts column 708, that host can be scanned with the device detection system 100. Optionally, the association preference column 710 can be used to select a preference for an association with a particular component of the discovered devices. For instance, as identified in the instruction box 702, the association preference column 710 can be used to cause the device detection system 100 to attempt to associate a tape driver with the devices discovered during the scan of the network.

In addition to the components described above, the second device detection GUI window 700 normally includes a "Select All" button 714 and a "Deselect All" button 716. As will be understood by persons by persons having ordinary skill in the art, these buttons 714 and 716 can be used to alternatively select each of the hosts of the Hosts column 708 for scanning, or deselect all of the hosts for the Hosts column for scanning.

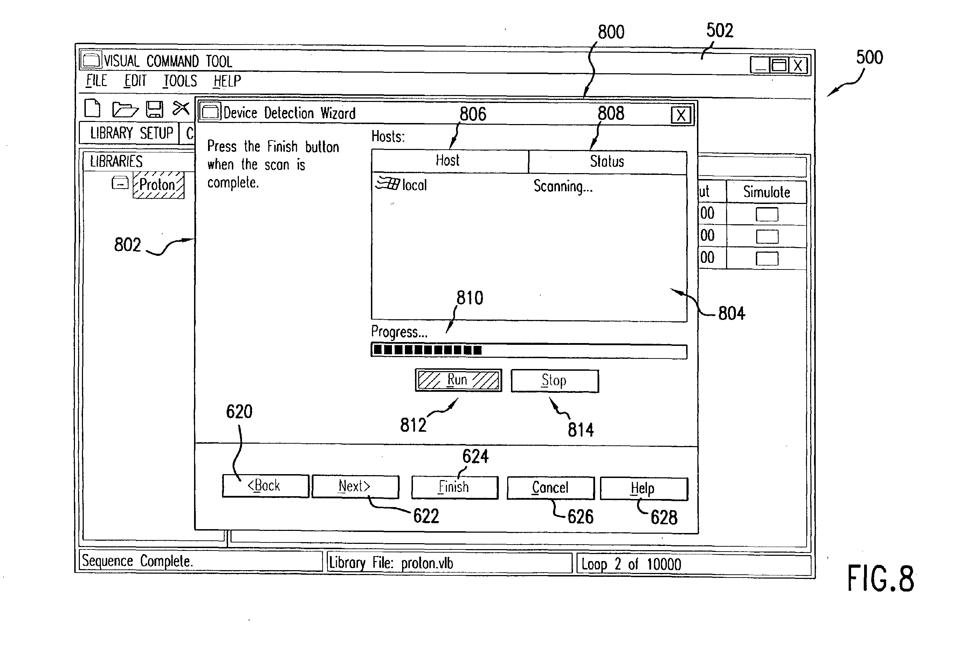

Once the hosts that the user wishes to have scanned are identified with checks in the Auto Configure column 706, the user can select the Next button 622 to proceed to the third device detection GUI window 800 illustrated in FIG. 8. This window 800 is a scanning window. Window 800 includes an instruction box 802, a view window 804, and the various buttons 620-628 of the first and second device detection GUI windows 600 and 700. In addition to these items, the third device detection GUI window 800 includes a "Hosts" column 806 and a "Status" column 808. The Hosts column 806 identifies the various hosts that are being scanned for devices and the Status column 808 indicates the status of the scanning process for each host. This progress is also graphically illustrated to the user with a scan progress bar 810 normally positioned underneath the view window 804. In addition, the third device detection GUI window 800 normally includes a "Run" button 812 and a "Stop" button 814. As their names suggest, the Run button 812 can be used to initiate or continue the scanning process and the Stop button 814 can be used to stop the scanning process.

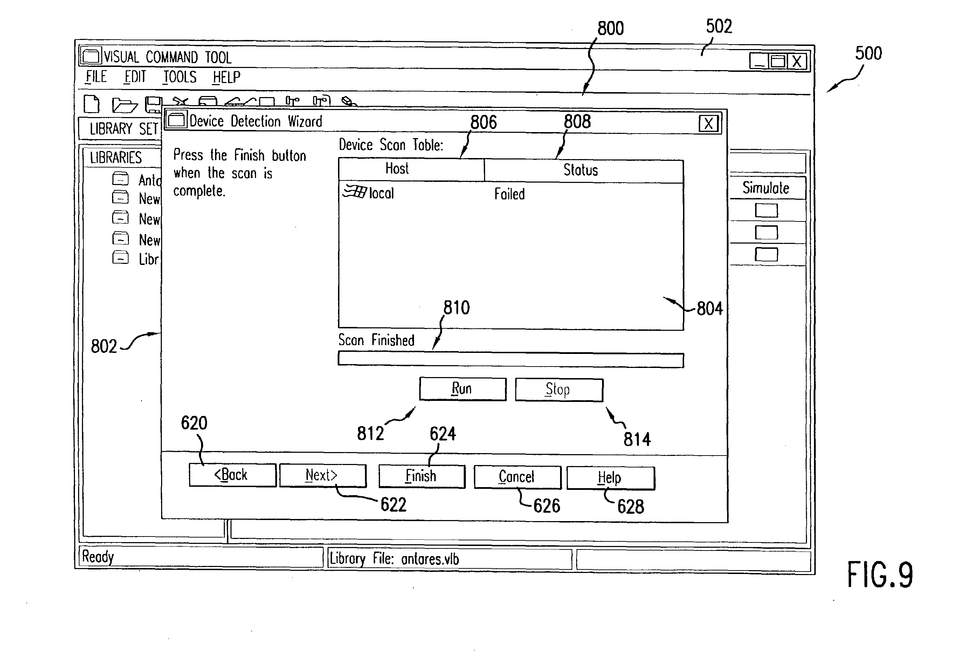

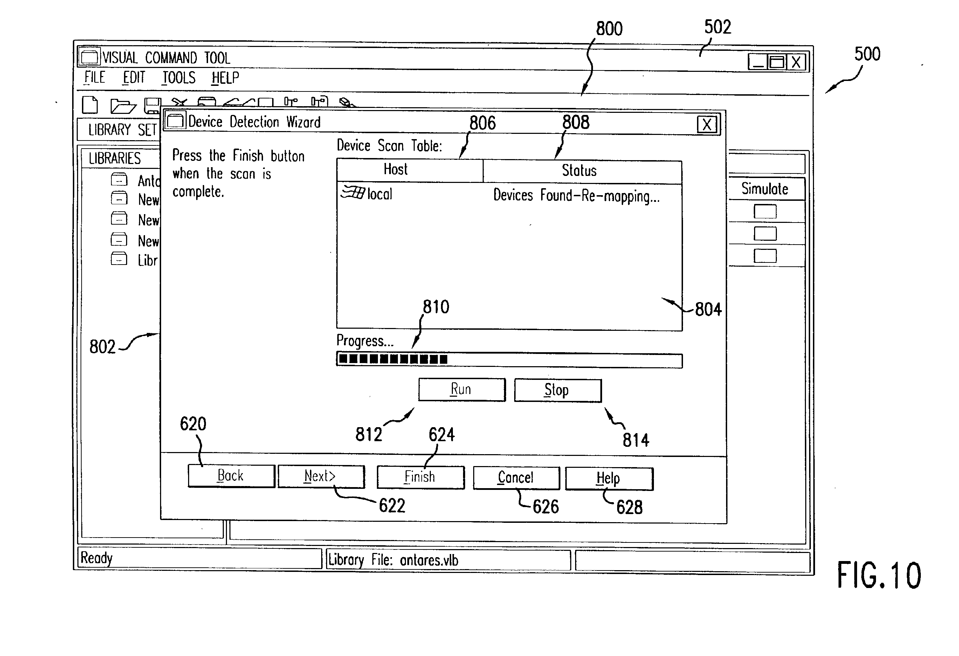

Once the scan process has been initiated, it normally continues through completion unless the user selects the Stop button 814. The device detection system 100 therefore performs its scan of the various hosts that have been selected via the second device detection GUI window 700 shown in FIG. 7. If for any reason a scan of a particular host cannot be conducted however (*e.g.*, the host is no longer running an RCP 104) the Status column 808 will identify a "Failed" condition for that host. For instance, as indicated in FIG. 9, the scan of the "Local" host was unsuccessful. If, on the other hand, the host(s) can be scanned, the third device detection GUI window 800 displays the progress of the scan with the scan progress bar 810 and the Status column 808 identifies when devices have been found and that the device detection system 100 is remapping the device configuration for a presentation to the user as indicated in FIG. 10.

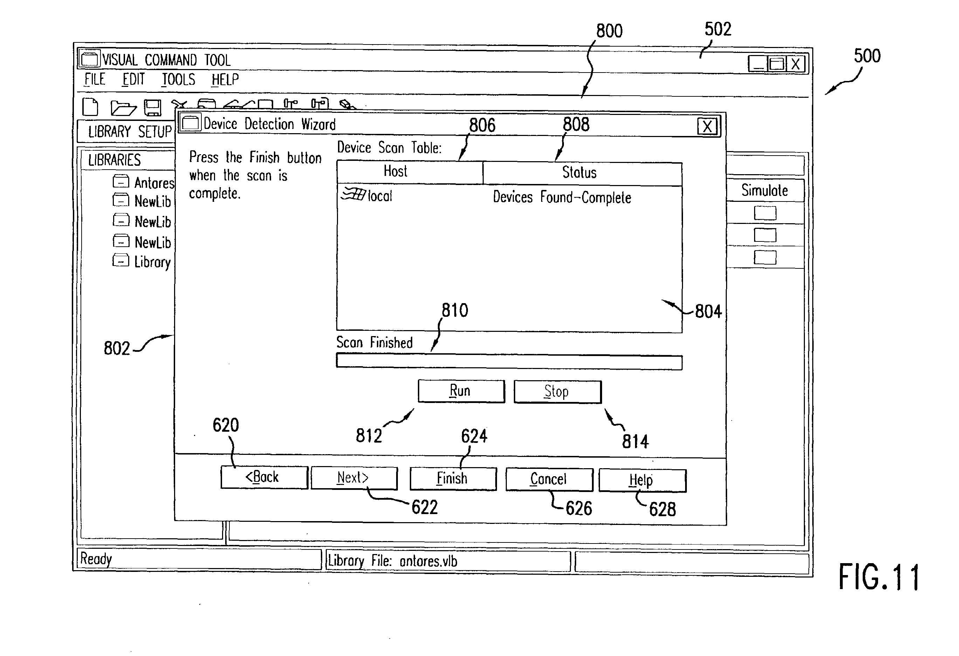

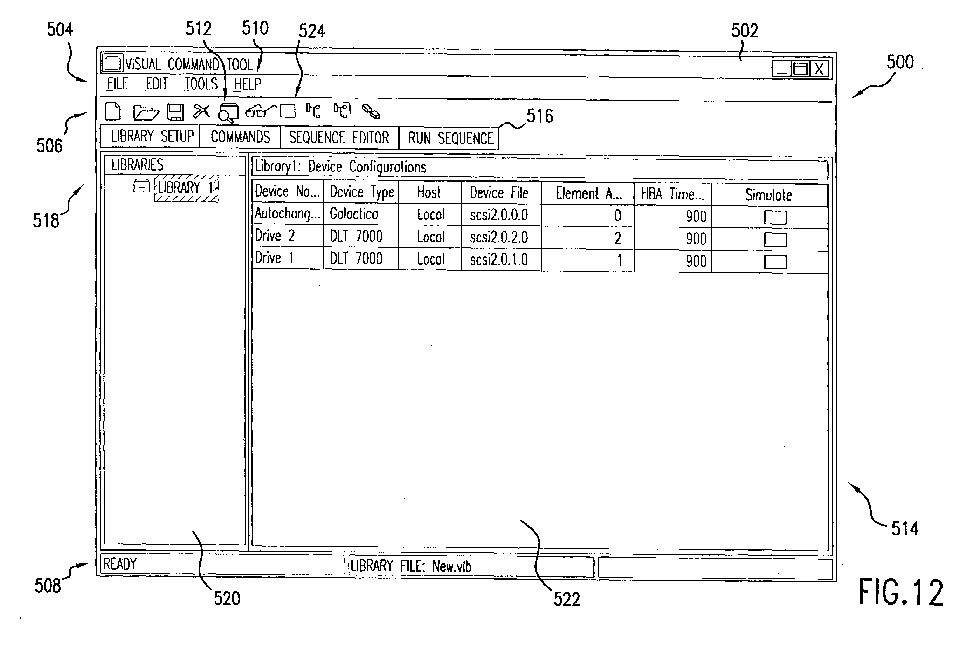

With reference to FIG. 11, once the scan of the host(s) is complete, the Status column 808 will identify a "Complete" condition for the scan. At this point, as indicated in the instruction box 802, the user can select the Finish button 624. Once this button 624 is selected, the third device detection GUI window 800 is removed so that the user can again view the full command user interface GUI 502. The user can then review the information contained within the view window 514 of the command user interface GUI 502 to view the various devices that were detected within the network. In particular, information about these devices is provided to the user in table form in the Device Configurations window 522. By way of example, and as illustrated in FIG. 12, the device name can be provided to the user as well as the type of device, the host to which the device is connected, and various other information about the device that may be useful to the user.

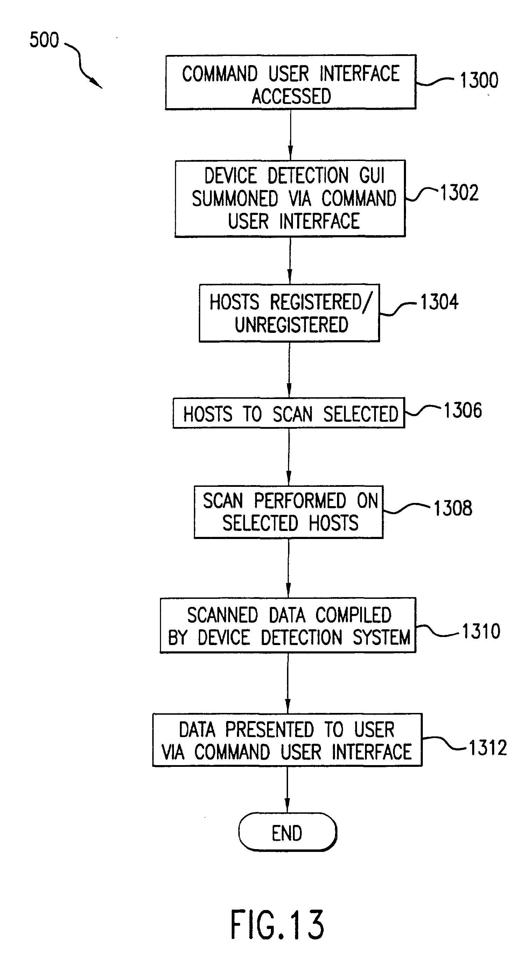

FIG. 13 illustrates a method for using the user interface 500 illustrated in FIGS. 5-12 to detect devices connected to a network. As indicated in this figure, the user first accesses the command user interface via the command user interface GUI 502, as identified in block 1300. Once the command user interface GUI 502 has been accessed, the user can summon the device detection GUI as indicated in block 1302. As indicated above with reference to FIG. 5, the device detection GUI can be summoned in a variety of ways including selection of a device detection GUI button 524, selection of a device detection GUI command of a pull-down menu 510, or by "right clicking" with a mouse in the manner identified above. Irrespective of the manner in which the device detection GUI is summoned, the first device detection GUI window 600 is first presented to the user. With this window 600, the user can register hosts with the device detection system 100 as identified in block 1304. As is discussed above with reference to FIGS. 1-5, this registration is normally accomplished with the HLP 106.

The first device detection GUI window 600 can be used to register and unregister hosts with the HLP 106. In particular, as identified above with reference to FIG. 6, the user can add hosts to the list by entering their names in the host name block 610 and selecting the Add button 612, or can remove hosts by highlighting the hosts listed in the host column and selecting the Remove button 614. Alternatively, all available hosts can be registered by selecting the Synch button 616. Selection of this button 616 will, as indicated in instruction box 602, cause all available hosts to be presented in the Host column 606, such that the user can , if desired, remove one or more of these hosts from the list.

Returning to FIG. 13, the various hosts that the user wishes to scan can be selected as indicated in block 1306. Normally, this is accomplished by checking checkboxes 712 located in the Auto Configure column 706 of the second device detection GUI window 700 (FIG. 7). Once the desired hosts have been identified in this manner, a scan can be performed as indicated in block 1308. Normally, the scan is initiated by selecting the Next button 622 of the second device detection GUI window 700 which, in turn, causes the CP 102 to send scan requests to the various RCPs 104. As indicated in FIG. 8, the third device detection GUI window 800 presents the scanning status to the user with the Status column 808 of the view window 804. After a successful scan is completed, a "Complete" status will be conveyed to the user with the Status column 808 of the view window 804 indicating that the RCPs 104 have responded to the CP scan request. At this point, as indicated in block 1310 of FIG. 13, the scan (*i.e*., device detection) data can be compiled by the CP 102 and, as indicated in block 1312, presented to the user with the command user interface GUI 502. In particular, as indicated in FIG. 12, the various characteristics of the detected devices can be presented to the user in a table of the Device Configurations column 522 of the view window 514. At this point, the user can access the various devices, if desired, via the command user interface GUI 502 so that these various devices can be utilized, if desired.

While particular embodiments of the invention have been disclosed in detail in the foregoing description and drawings for purposes of example, it will be understood by those skilled in the art that variations and modifications thereof can be made without departing from the scope of the invention as set forth in the following claims.

## Claims

1. A method for detecting devices connected a remote host of a network, comprising:
receiving a scan request with a command user interface (1300);
generating a device detection user interface (1302);
receiving instructions as to which hosts to scan with the device detection user interface (1306);
sending a scan request to at least one remote host;
scanning the at least one remote host to determine if devices are connected to the at least one remote host (1310);
receiving a response to the scan request that indicates whether a device is connected to the at least one remote host; and
presenting the scan response to a user with the command user interface (1312).

2. The method of claim 1, further comprising the step of presenting a list of registered hosts available for scanning to a user with the device detection user interface prior to receiving instructions as to which hosts to scan.

3. The method of claim 2, further comprising the step of compiling the list of registered hosts with a host lookup process running on a network host prior to the step of presenting a list of registered hosts.

4. The method of claim 2, further comprising the step of modifying the list of registered hosts in response to user input though the device detection user interface.

5. The method of claim 1, wherein the step of presenting the scan response comprises the step of presenting device names to the user with the command user interface.

6. The method of claim 5, wherein the step of presenting the scan response further comprises the step of presenting device types to the user with the command user interface.

7. The method of claim 6, wherein the step of presenting the scan response further comprises the step of presenting an indication of the host to which the devices are connected to the user with the command user interface.

8. A system for detecting devices connected a remote host of a network, comprising:
means for receiving a scan request with a command user interface;
means for generating a device detection user interface;
means for receiving instructions as to which hosts to scan with the device detection user interface;
means for sending a scan request to at least one remote host;
means for scanning the at least one remote host to determine if devices are connected it;
means for receiving a response to the scan request that indicates whether a device is connected to the at least one remote host; and
means for presenting the scan response to a user with the command user interface.

9. A system for detecting devices connected a remote host of a network including computer readable media, comprising:
logic configured to receive a scan request with a command user interface;
logic configured to generate a device detection user interface;
logic configured to receive instructions as to which hosts to scan with the device detection user interface;
logic configured to send a scan request to at least one remote host;
logic configured to scan the at least one remote host to determine if devices are connected it;
logic configured to receive a response to the scan request that indicates whether a device is connected to the at least one remote host; and
logic configured to present the scan response with the command user interface.

10. A user interface of a device detection system, comprising:
a command user interface (502) in communication with a control process running on a network host and a host lookup process running on a network host; and
a device detection user interface (600) associated with the command user interface and in communication with the control process and at least one remote command process running on at least one network host;
wherein the device detection user interface is adapted to receive a scan request and communicate it to the control process so that the control process can convey the scan request to the at least one remote command process running on the at least one network host and the at least one remote command process can deliver the scan results to the control process.
